# EUROPEAN PATENT APPLICATION

(11) **EP 3 280 220 A1**
(43) Date of publication of application: **07.02.2018**
(21) Application number: 15887194.7
(22) Date of filing: 06.09.2015
(51) Int. Cl.: H04W 88/06

(54) **SIM CARD ADAPTATION METHOD AND DEVICE, AND SIM CARD MANAGEMENT DEVICE AND TERMINAL**

(30) Priority: 30.03.2015 CN 201510143594
(71) Applicant: ZTE Corporation, Shenzhen, Guangdong 518057 (CN)
(72) Inventor: TAN, Guanjun, Shenzhen Guangdong 518057 (CN)
(74) Representative: HGF Limited
(86) International application number: PCT/CN2015/088993
(87) International publication number: WO 2016/155237

(57) **Abstract**

Disclosed are a SIM card adaptation method and a SIM card adaptation device, and a SIM card management device and a mobile communication terminal. The SIM card adaptation method includes: sending data to a SIM card management device with multiple card slots to enable the SIM card management device to select, according to the data, a target SIM card from multiple SIM cards inserted into the multiple cards slots, and transmit data between the target SIM card and a first interface via a second interface configured to be connected with the first interface of the mobile communication terminal to enable the mobile communication terminal to provide services by using the target SIM card; herein the first interface is connected with a SIM card slot built in the mobile communication terminal.

## Description

### Technical Field

Embodiments of the invention relate but are not limited to mobile communication filed, and in particular, to a SIM card adaptation method and a SIM card adaptation device, and a SIM card management device and a mobile communication terminal.

### Background

At present, more and more business people and tourists are traveling abroad, thus more and more communications appear in different countries or regions.

Typically, a SIM (Subscriber Identity Module) card of a country or region needs to pay expensive roaming fees when used in other countries or regions. If wanting to avoid paying expensive roaming fees, a user needs to manually change the SIM card in the mobile communication terminal in real time after entering different countries or regions.

However, if a lot of SIM cards need to be used, saving and manually changing the SIM card is very troublesome and inconvenient for the user.

### Summary

The following is a summary of the object described in this disclosure. The summary is not intended to limit the protection scope of the claims.

Embodiments of the present invention provide a SIM card adaptation method and a SIM card adaptation device, and a SIM card management device and a mobile communication terminal. A user does not need to manually change the SIM card, and the SIM card can be automatically adapted according to a network environment, which is convenient for the user to use and prevents the user from paying expensive roaming fees.

An embodiment of the present invention provides a SIM card management device, including:
multiple card slots, which are configured to contain SIM cards;
a SIM card selecting unit, which is configured to select, according to data received from a mobile communication terminal, a target SIM card from multiple SIM cards inserted into the multiple card slots; and
a second interface, which is configured to connect with a first interface arranged on the mobile communication terminal to transmit data between the target SIM card and the first interface, to enable the mobile communication terminal to provide services by using the target SIM card;
herein, the first interface is connected with a SIM card slot built in the mobile communication terminal.

In an exemplary embodiment, the SIM card management device further includes: a first receiving module, which is configured to receive mobile country code (MCC) and mobile network code (MNC) information of a local network from the mobile communication terminal;
the SIM card selecting unit includes: a first selecting unit, which is configured to select, according to a preset corresponding mapping rule between networks and SIM cards, a target SIM card matching the MCC and MNC information.

In an exemplary embodiment, the SIM card management device further includes: a second receiving module, which is configured to receive a switching instruction from the mobile communication terminal.

The SIM card selecting unit includes: an analysis unit, which is configured to analyze the switching instruction to determine a target card slot; and a second selecting unit, which is configured to select a SIM card inserted into the target card slot.

An embodiment of present invention also provides a SIM card adaptation device, arranged on a mobile communication terminal, including: a sending module, which is configured to send data to a SIM card management device with multiple card slots to enable the SIM card management device to select, according to the data, a target SIM card from multiple SIM cards inserted into the multiple cards slots, and transmit data between the target SIM card and a first interface via a second interface configured to be connected with the first interface of the mobile communication terminal, to enable the mobile communication terminal to provide services by using the target SIM card;
herein the first interface is connected with a SIM card slot built in the mobile communication terminal.

In an exemplary embodiment, the SIM card adaptation device further includes: a first acquiring module, which is configured to acquire mobile country code (MCC) and mobile network code (MNC) information of a local network.

The sending module sending data to a SIM card management device with multiple card slots means that the sending module sends the MCC and MNC information to the SIM card management device with multiple card slots to enable the SIM card management device to select, according to a preset corresponding mapping rule between networks and SIM cards, a target SIM card matching the MCC and MNC information.

In an exemplary embodiment, the SIM card adaptation device further includes:
a second acquiring module, which is configured to acquire MCC and MNC information of a local network; and
a selecting module, which is configured to select, according to a preset corresponding mapping rule between networks and SIM cards, a target SIM card matching the MCC and MNC information and generate a switching instruction in which information of the target SIM card is recorded.

The sending module sending data to a SIM card management device with multiple card slots means that the sending module sends the switching instruction to the SIM card management device with multiple card slots to enable the SIM card management device to analyze the switching instruction to determine a target card slot and select a SIM card inserted into the target card slot.

An embodiment of the present invention also provides a SIM card adaptation method, applied to a mobile communication terminal, the SIM card adaptation method includes:
sending data to a SIM card management device with multiple card slots to enable the SIM card management device to select, according to the data, a target SIM card from multiple SIM cards inserted into the multiple cards slots, and transmit data between the target SIM card and a first interface via a second interface configured to be connected with the first interface of the mobile communication terminal to enable the mobile communication terminal to provide services by using the target SIM card;
herein the first interface is connected with a SIM card slot built in the mobile communication terminal.

In an exemplary embodiment, the SIM card adaptation method further includes:
acquiring mobile country code (MCC) and mobile network code (MNC) information of local network.

Sending data to a SIM card management device with multiple card slots to enable the SIM card management device to select, according to the data, a target SIM card from multiple SIM cards inserted into the multiple cards slots, includes:
sending the MCC and MNC information to the SIM card management device with multiple card slots to enable the SIM card management device to select, according to a preset corresponding mapping rule between networks and SIM cards, a target SIM card matching the MCC and MNC information.

In an exemplary embodiment, the SIM card adaptation method further includes:
acquiring MCC and MNC information of a local network;
selecting, according to a preset corresponding mapping rule between networks and SIM cards, a target SIM card matching the MCC and MNC information and generating a switching instruction in which information of the target SIM card is recorded.

Sending data to a SIM card management device with multiple card slots to enable the SIM card management device to select, according to the data, a target SIM card from multiple SIM cards inserted into the multiple cards slots, includes:
sending the switching instruction to the SIM card management device with multiple card slots to enable the SIM card management device to analyze the switching instruction to determine a target card slot and select a SIM card inserted into the target card slot.

An embodiment of the present invention also provides a mobile communication terminal, which includes any SIM card adaptation device described above.

An embodiment of the present invention also provides a computer storage medium storing program instructions, which, when executed, implement the above method.

The SIM card adaptation method provided by the embodiment of the present invention is applied to a mobile communication terminal. By a SIM card management device connected the mobile communication terminal, according to a preset corresponding mapping rule between networks and SIM cards and MCC and MNC information of a local network, a matched target SIM card can be selected, the mobile communication terminal is enabled to provide services by using the target SIM card. Accordingly, manual switching of the SIM card by the user is avoided and automatic adaptation for the SIM card is achieved according to a network environment, which is not only convenient for a user to use, but also prevents the user from paying expensive roaming fees.

Furthermore, the SIM card management device provided by the embodiment of the present invention includes multiple card slots configured to contain SIM cards, a SIM card selecting unit, a second interface. The second interface is configured to connect with a first interface arranged on the mobile communication terminal, and the first interface is connected to a SIM card slot built in the mobile communication terminal, to transmit data between the target SIM card and the first interface to enable the mobile communication terminal to provide services by using the target SIM card. Thus, without reconstructing the mobile communication terminal massively, by using the SIM card management device, the mobile communication terminal is enabled to automatically adapt the SIM card, which is convenient to manage and reduces development costs to some extent.

Other aspects will be appreciated upon reading and understanding the attached figures and detailed description.

### Brief Description of Drawings

Fig. 1 is a structure diagram of connection of a SIM card management device with a mobile communication terminal according to an embodiment of the invention.
Fig. 2 is a structure diagram of a SIM card adaptation device according to an embodiment of the invention.
Fig. 3 is a flowchart of a SIM card adaptation method according to an embodiment of the invention.
Fig. 4 is a flowchart of an adaptation for a SIM card via a built-in single chip microcomputer.

### Detailed Description

Embodiments are described in detail in the following in combination with drawings.

An embodiment of the present invention provides a SIM card management device used in combination with the mobile communication terminal. Accordingly, the mobile communication terminal automatically adapts the SIM card according to a network environment, which is convenient for a user to use and prevents the user from paying expensive roaming fees.

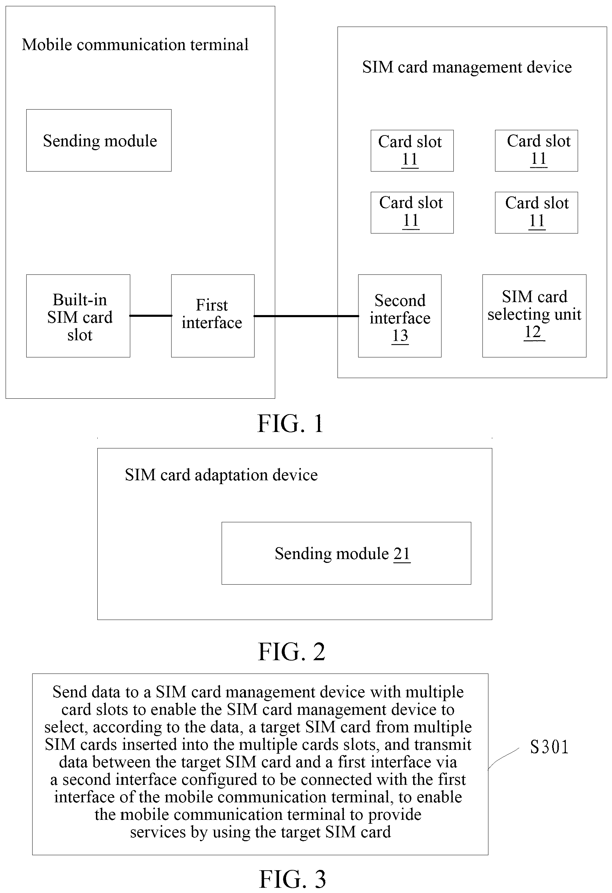

As shown in Fig. 1, the structure diagram of connection of a SIM card management device with a mobile communication terminal according to an embodiment of the invention, herein, the SIM card management device includes multiple card slots 11, a selecting unit 12 and a second interface 13.

The multiple card slots 11 are configured to contain SIM cards;

The selecting unit 12 of the SIM card is configured to select a target SIM card from multiple SIM cards inserted into the multiple card slots according to data received from a mobile communication terminal. The second interface 13 is configured to connect with a first interface arranged on the mobile communication terminal to transmit data between the target SIM card and the first interface, to enable the mobile communication terminal to provide services by using the target SIM card.

Herein, the first interface is connected with a SIM card slot built in the mobile communication terminal.

Since the SIM card management device contains multiple card slots and can select a target SIM card from multiple SIM cards, and the SIM card management device is connected with the mobile communication terminal via a connection between the first interface and the second interface, thus the mobile communication terminal is enabled to provide services by using the target SIM card selected by the SIM card management device. Manual switching of the SIM card by the user is avoided and automatic adaptation for the SIM card is achieved.

The SIM card management device can be built-in the mobile communication terminal, or externally connected with the mobile communication terminal. Embodiments of the present invention are not limited thereto. It is convenient to carry when the SIM card management device is built-in the mobile communication terminal.

It should be noted that the selecting unit 12 of the SIM card in an embodiment of the present invention can be hardware or software. For example, when it is hardware, a single-pole single-throw switch or a single-pole multiple-throw switch can be used to select a target SIM card from multiple SIM cards. When it is software, a single chip microcomputer can be used to select a target SIM card from multiple SIM cards.

In the following description, a realization way for the selecting unit 12 of the SIM card is software. However, embodiments of the present invention are not limited thereto.

In an embodiment of the present invention, data received by the SIM card management device from the mobile communication terminal can be a global mobile device network code of a local network (including mobile country code (MCC) and mobile network code (MNC) information which is used to uniquely identify a mobile network), or a switching instruction. A target SIM card is selected from multiple SIM cards inserted in multiple card slots according to the data. The details are as following.

Firstly, the data received is the MCC/MNC information of the local network.

When the data received from the mobile communication terminal is the MCC/MNC information of the local network, the SIM card management device further includes:
a first receiving module, which is configured to receive MCC/MNC information of a local network from the mobile communication terminal.

Meanwhile the selecting unit 12 of the SIM card includes:
a first selecting unit, which is configured to select, according to a preset corresponding mapping rule between networks and SIM cards, a target SIM card matching the information of the MCC/MNC.

The preset corresponding mapping rule between networks and SIM cards is the corresponding relationship between the MCC/MNC information of the local network and SIM card Integrate circuit card identity (ICCID) information. Since the ICCID information is the information for identifying the SIM card uniquely, therefore a matched target SIM card can be selected according to a preset corresponding mapping rule between networks and SIM cards and MCC/MNC information of the local network.

Secondly, the data received is a switching instruction.

When the data received from the mobile communication terminal is a switching instruction, the SIM card management device further includes:
a second receiving module, which is configured to receive a switching instruction from the mobile communication terminal.

Meanwhile the selecting unit 12 of the SIM card includes:
an analysis unit, which is configured to analyze the switching instruction to determine a target card slot; and
a second selecting unit, which is configured to select a SIM card inserted into the target card slot.

Thus, the target card slot can be determined by analyzing the switching instruction which is sent directly from the mobile communication terminal, then a SIM card inserted into the target card slot (the target SIM card) is selected and the mobile communication terminal is enabled to provide services by using the target SIM card.

Accordingly, an embodiment of the present invention provides a SIM card adaptation device which is arranged on a mobile communication terminal. As shown in Fig. 2, it is a structure diagram of a SIM card adaptation device according to an embodiment of the invention. The SIM card adaptation device includes a sending module 21. The sending module 21 is configured to send data to a SIM card management device with multiple card slots, for the SIM card management device to select, according to the data, a target SIM card from multiple SIM cards inserted into the multiple cards slots. The sending module 21 further transmits data between the target SIM card and a first interface via a second interface configured to be connected with the first interface of the mobile communication terminal to enable the mobile communication terminal to provide services by using the target SIM card.

Herein the first interface is connected with a SIM card slot built in the mobile communication terminal.

By the SIM card adaptation device as shown in Fig.2, data is sent to a SIM card management device with multiple card slots. Thus, the SIM card management device can select, according to the data, the target SIM card, and perform data transmission between the target SIM card and the first interface via the second interface connected with the first interface of the mobile communication terminal to enable the mobile communication terminal to provide services by using the target SIM card. Therefore, the mobile communication terminal achieves automatic adaptation for the SIM card, and manual switching of the SIM card by the user is avoided.

And in an embodiment of the present invention, the mobile communication terminal supports global network Access Point Name (APN) technology, to realize automatic adaptation of SIM card and avoid setting manually APN of each SIM card. After adapting successfully, corresponding information of the SIM card slot can be displayed on the mobile communication terminal, then the user is informed of which SIM card is used.

In an embodiment of the present invention, the data sent by the SIM card adaptation device can be either global mobile terminal network code MCC and MNC information, or switching instruction, thus the SIM card adaptation device is enabled to select the target SIM card according to the data. The details are shown as following.
(1) the data sent is the MCC/MNC information of the local network.

When the data sent by the SIM card adaptation device is the MCC/MNC information of the local network, the SIM card adaptation device includes:
a first acquiring module, which is configured to acquire MCC and MNC information of a local network.

Data sent by the sending module is the MCC/MNC information, and the SIM card management device is enabled to select, according to a preset corresponding mapping rule between networks and SIM cards, a target SIM card matching the MCC and MNC information.
(2) the data sent is a switching instruction.

When the data sent by the SIM card adaptation device is the switching instruction, the SIM card adaptation device includes:
a second acquiring module, which is configured to acquire MCC and MNC information of a local network; and
a selecting module, which is configured to select, according to a preset corresponding mapping rule between networks and SIM cards, a target SIM card matching the MCC and MNC information and generate a switching instruction in which information of the target SIM card is recorded.

Data sent by the sending module is the switching instruction, and the SIM card management device is enabled to analyze the switching instruction to determine a target card slot and select a SIM card inserted into the target card slot.

Therefore, when the SIM card management device selects a target SIM card, then data can be transmitted between the target SIM card and a first interface via a second interface configured to be connected with the first interface of the mobile communication terminal, to enable the mobile communication terminal to provide services by using the target SIM card.

As shown in Fig. 3, an embodiment of the present invention also provides a SIM card adaptation method, applied to a mobile communication terminal. Corresponding to the SIM card adaptation device shown in Fig. 2, the SIM card adaptation method includes:
data is sent to a SIM card management device with multiple card slots to enable the SIM card management device to select, according to the data, a target SIM card from multiple SIM cards inserted into the multiple cards slots, and transmit data between the target SIM card and a first interface via a second interface configured to be connected with the first interface of the mobile communication terminal, to enable the mobile communication terminal to provide services by using the target SIM card. Herein the first interface is connected with a SIM card slot built in the mobile communication terminal.

In an embodiment of the present invention, the data sent to the SIM card management device can be either global mobile terminal network code MCC and MNC information of a local network or a switching instruction, to enable the SIM card adaptation device to select the target SIM card according to the data. The details are shown as following:

In an embodiment of the present invention, the SIM card adaptation method further includes:
acquiring global mobile terminal network code MCC/MNC information of a local network.

Sending data to a SIM card management device with multiple card slots to enable the SIM card management device to select, according to the data, a target SIM card from multiple SIM cards inserted into the multiple cards slots, includes:
sending the MCC/MNC information to the SIM card management device with multiple card slots to enable the SIM card management device to select, according to a preset corresponding mapping rule between networks and SIM cards, a target SIM card matching the MCC/MNC information.

In an embodiment of the present invention, the SIM card adaptation method further includes:
acquiring global mobile terminal network code MCC/MNC information of a local network;
selecting, according to a preset corresponding mapping rule between networks and SIM cards, a target SIM card matching the MCC/MNC information and generating a switching instruction in which information of the target SIM card is recorded;
sending data to a SIM card management device with multiple card slots to enable the SIM card management device to select, according to the data, a target SIM card from multiple SIM cards inserted into the multiple cards slots, includes:
   sending the switching instruction to the SIM card management device with multiple card slots to enable the SIM card management device to analyze the switching instruction to determine a target card slot and select a SIM card inserted into the target card slot.

In practical application, a mobile communication terminal default may set a corresponding mapping rule between networks and SIM cards, or accept a corresponding mapping rule between networks and SIM cards set or modified manually by the user, then select a target SIM card which is matched with the MCC/MNC information of a local network according to a preset mapping rule, to generate a switching instruction which is corresponding to the target SIM card.

For example, when a target SIM card matching the MCC/MNC information of local network is not selected out according to a preset mapping rule, then a preset corresponding mapping rule between networks and SIM cards can be modified, so as to select a matched target SIM card according to the modified mapping rule.

In addition, a user can select SIM card manually, then a mobile communication terminal generates a switching instruction in which the information of the SIM card selected manully is recorded and sends the switching instruction to SIM card management device for selecting the target SIM card, and the mobile communication terminal is enabled to provide services by using the target SIM card.

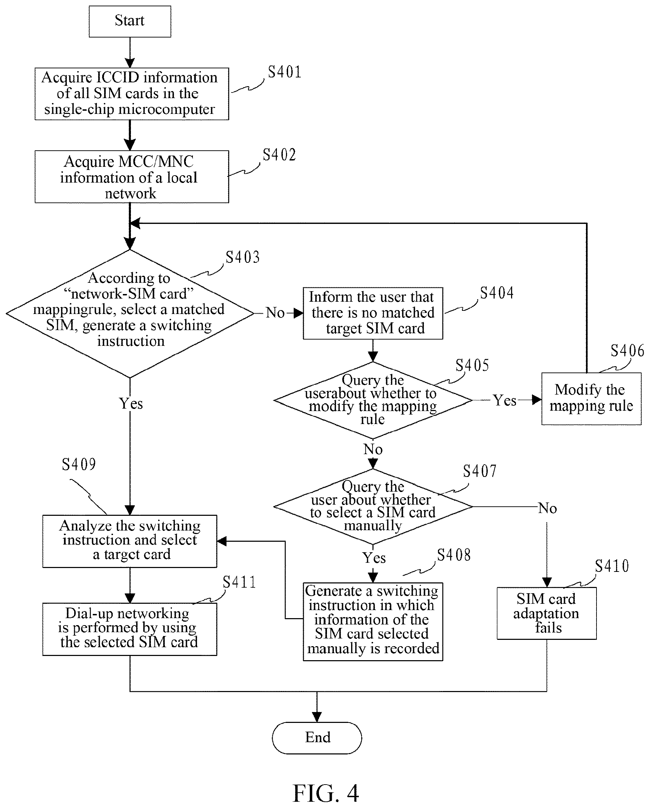

Hereinafter, by taking that a SIM card management device is a built-in single-chip microcomputer as an example, a flowchart of a SIM card adaptation by a built-in single-chip microcomputer will be described in detail according to an embodiment of present invention, as shown in Fig. 4, the flowchart includes following steps.

In Step 401, ICCID information of all SIM cards in the built-in single-chip microcomputer is acquired.

In Step 402, MCC/MNC information of a local network is acquired.

In Step 403, according to a preset corresponding mapping rule between networks and SIM cards ("network-SIM card" mapping rule, for short), a target SIM card matching the MCC/MNC information is selected, a switching instruction in which information of the target SIM card is recorded is generated. If the switching instruction is generated successfully, it is to proceed to Step 409; if the switching instruction is not generated successfully, it is to proceed to Step 404.

In Step 404, the user is informed of that there is no matched SIM card according to the current local network MCC/MNC information and the mapping rule.

In Step 405, the user is queried about whether to modify the mapping rule; if yes, it is to proceed to Step 406; if not, it is to proceed to Step 410.

In Step 406, the mapping rule is modified and saved, then it is to proceed to Step 403.

In Step 407, the user is queried about whether to select a SIM card manually; if yes, it is to proceed to Step 408; if not, it is to proceed to step 410.

In Step 408, a switching instruction, in which information of the SIM card selected manually is recorded, is generated.

In Step 409, a built-in single-chip microcomputer analyzes the switching instruction to determine a target card slot, and selects a SIM card inserted in the target card slot, then it is to proceed to Step 411.

In Step 410: the user is prompted that SIM card adaptation fails.

In Step 411, Dial-up networking is performed through APN corresponding to the selected SIM card.

In addition, an embodiment of the present invention also provides a mobile communication terminal, which includes the SIM card adaptation device and can automatically adapt a SIM card depending on a network environment.

The ordinary skilled person in the art can understand that all or part of the steps in the method described above can be completed by a program instructing related hardware. The program can be stored in a computer readable storage medium, such as ROM, disk or CD. Alternatively, all or part of steps in the above embodiment can be realized by one or more integrated circuits. Correspondingly, a module/ unit of the above embodiment can by realized by hardware or software function module. Embodiments of the present invention are not limited to any particular form of combination of hardware and software.

### Industrial Applicability

The SIM card adaptation method provided by the embodiment of the present invention is applied to a mobile communication terminal. By a SIM card management device connected the mobile communication terminal, according to a preset corresponding mapping rule between networks and SIM cards and MCC and MNC information of a local network, a matched target SIM card can be selected, the mobile communication terminal is enabled to provide services by using the target SIM card. Accordingly, manual switching of the SIM card by the user is avoided and automatic adaptation for the SIM card is achieved according to a network environment, which is not only convenient for a user to use, but also prevents the user from paying expensive roaming fees.

Furthermore, the SIM card management device provided by the embodiment of the present invention includes multiple card slots configured to contain SIM cards, a SIM card selecting unit, a second interface. The second interface is configured to connect with a first interface arranged on the mobile communication terminal, and the first interface is connected to a SIM card slot built in the mobile communication terminal, to transmit data between the target SIM card and the first interface to enable the mobile communication terminal to provide services by using the target SIM card. Thus, without reconstructing the mobile communication terminal massively, by using the SIM card management device, the mobile communication terminal is enabled to automatically adapt the SIM card, which is convenient to manage and reduces development costs to some extent.

## Claims

1. A SIM card management device, comprising:
a plurality of card slots, which are configured to contain SIM cards;
a SIM card selecting unit, which is configured to select, according to data received from a mobile communication terminal, a target SIM card from a plurality of SIM cards inserted into the plurality of card slots; and
a second interface, which is configured to connect with a first interface arranged on the mobile communication terminal to transmit data between the target SIM card and the first interface, to enable the mobile communication terminal to provide services by using the target SIM card;
wherein, the first interface is connected with a SIM card slot built in the mobile communication terminal.

2. The SIM card management device according to claim 1, wherein the device further comprises:
a first receiving module, which is configured to receive mobile country code, MCC, and mobile network code, MNC, information of a local network from the mobile communication terminal;
the SIM card selecting unit comprises:
a first selecting unit, which is configured to select, according to a preset corresponding mapping rule between networks and SIM cards, a target SIM card matching the MCC and MNC information.

3. The SIM card management device according to claim 1, wherein the device further comprises:
a second receiving module, which is configured to receive a switching instruction from the mobile communication terminal;
the SIM card selecting unit comprises:
an analysis unit, which is configured to analyze the switching instruction to determine a target card slot; and
a second selecting unit, which is configured to select a SIM card inserted into the target card slot.

4. A SIM card adaptation device, arranged on a mobile communication terminal, comprising:
a sending module, which is configured to send data to a SIM card management device with a plurality of card slots to enable the SIM card management device to select, according to the data, a target SIM card from a plurality of SIM cards inserted into the plurality of cards slots, and transmit data between the target SIM card and a first interface via a second interface configured to be connected with the first interface of the mobile communication terminal, to enable the mobile communication terminal to provide services by using the target SIM card;
wherein the first interface is connected with a SIM card slot built in the mobile communication terminal.

5. The SIM card adaptation device according to claim 4, wherein the device further comprises:
a first acquiring module, which is configured to acquire mobile country code, MCC, and mobile network code, MNC, information of a local network;
wherein the sending module sending data to a SIM card management device with a plurality of card slots refers to that the sending module sends the MCC and MNC information to the SIM card management device with a plurality of card slots to enable the SIM card management device to select, according to a preset corresponding mapping rule between networks and SIM cards, a target SIM card matching the MCC and MNC information.

6. The SIM card adaptation device according to claim 4, wherein the device further comprises:
a second acquiring module, which is configured to acquire MCC and MNC information of a local network; and
a selecting module, which is configured to select, according to a preset corresponding mapping rule between networks and SIM cards, a target SIM card matching the MCC and MNC information, and generate a switching instruction in which information of the target SIM card is recorded;
the sending module sending data to a SIM card management device with a plurality of card slots refers to that the sending module sends the switching instruction to the SIM card management device with a plurality of card slots to enable the SIM card management device to analyze the switching instruction to determine a target card slot and select a SIM card inserted into the target card slot.

7. A SIM card adaptation method, applied to a mobile communication terminal, comprising:
sending data to a SIM card management device with a plurality of card slots to enable the SIM card management device to select, according to the data, a target SIM card from a plurality of SIM cards inserted into the plurality of cards slots, and transmit data between the target SIM card and a first interface via a second interface configured to be connected with the first interface of the mobile communication terminal to enable the mobile communication terminal to provide services by using the target SIM card;
wherein the first interface is connected with a SIM card slot built in the mobile communication terminal.

8. The SIM card adaptation method according to claim 7, wherein the method further comprises:
acquiring mobile country code, MCC, and mobile network code, MNC, information of a local network;
sending data to a SIM card management device with a plurality of card slots to enable the SIM card management device to select, according to the data, a target SIM card from a plurality of SIM cards inserted into the plurality of cards slots, comprises:
sending the MCC and MNC information to the SIM card management device with a plurality of card slots to enable the SIM card management device to select, according to a preset corresponding mapping rule between networks and SIM cards, a target SIM card matching the MCC and MNC information.

9. The SIM card adaptation method according to claim 7, wherein the method further comprises:
acquiring MCC and MNC information of a local network;
selecting, according to a preset corresponding mapping rule between networks and SIM cards, a target SIM card matching the MCC and MNC information and generating a switching instruction in which information of the target SIM card is recorded;
sending data to a SIM card management device with a plurality of card slots to enable the SIM card management device to select, according to the data, a target SIM card from a plurality of SIM cards inserted into the plurality of cards slots, comprises:
sending the switching instruction to the SIM card management device with a plurality of card slots to enable the SIM card management device to analyze the switching instruction to determine a target card slot and select a SIM card inserted into the target card slot.

10. A mobile communication terminal, comprising the SIM card adaptation device according to any one of claims 4 to 6.

11. A computer storage medium, storing program instructions, which, when executed, implement the SIM card adaptation method according to any one of claims 7 to 9.
